# EUROPÄISCHE PATENTSCHRIFT

(11) **EP 2 183 471 B1**
(45) Veröffentlichungstag und Bekanntmachung des Hinweises auf die Patenterteilung: **23.11.2011**
(21) Anmeldenummer: 08760612.5
(22) Anmeldetag: 05.06.2008
(51) Int. Cl.: F01N 3/023, F01N 3/035, F02B 37/00

(54) **ABGASNACHBEHANDLUNG VOR EINEM TURBOLADER**
EXHAUST-GAS SECONDARY TREATMENT PRECEDING A TURBOCHARGER
POST-TRAITEMENT DE GAZ D'ECHAPPEMENT EN AMONT D'UN TURBOCOMPRESSEUR

(30) Priorität: 13.07.2007 DE 102007032736
(43) Veröffentlichungstag der Anmeldung: 12.05.2010
(73) Patentinhaber: Emitec Gesellschaft für Emissionstechnologie mbH, 53797 Lohmar (DE); BorgWarner, Inc., Auburn Hills, MI 48326-1785 (US)
(72) Erfinder: BRÜCK, Rolf, 51429 Bergisch Gladbach (DE); JOERGL, Volker, A-2384 Breitenfurt (AT)
(74) Vertreter: Rössler, Matthias
(86) Internationale Anmeldenummer: PCT/EP2008/057037
(87) Internationale Veröffentlichungsnummer: WO 2009/010335

(56) Entgegenhaltungen:
- EP-A- 1 260 684
- DE-A1-102004 045 178

## Beschreibung

Die vorliegende Erfindung betrifft eine Abgasnachbehandlungsanlage für eine Verbrennungskraftmaschine eines Fahrzeugs, die wenigstens eine Abgasleitung und wenigstens einen Turbolader sowie zumindest einen Abgas-Konverter aufweist. Dabei handelt es sich insbesondere um ein System zur Nachbehandlung von Abgas eines Magermotors eines Personenkraftfahrzeuges.

In den vergangenen Jahren stand die Einhaltung von Abgasgesetzgebungen für Ottomotoren im Vordergrund, diese Situation hat sich jedoch zuletzt geändert. Die Bedeutung der durch Dieselmotoren verursachten Umweltbelastung ist stärker in das Bewusstsein der Öffentlichkeit gelangt. Der Grund liegt zum einen in der Diskussion einer besonderen Gefährdung der Gesundheit durch die Partikelemission dieses Motortyps und zum Anderen in den drastisch ansteigenden Zulassungszahlen der Dieselfahrzeuge in Europa. Ausschlaggebend für diese Entwicklung sind nicht ausschließlich ökonomische Gründe, sondern auch das Fahrverhalten der Fahrzeuge mit modernen Dieselmotoren, das durch hohes Drehmoment bei niedrigen Drehzahlen gekennzeichnet ist. Um die Schadstoffbelastung möglichst gering zuhalten, wurden bereits eine Vielzahl unterschiedlicher Systeme entwickelt und zum Einsatz gebracht, wie beispielsweise verbesserte Einspritzsysteme (Common-Rail-Systeme mit höheren Einspritzdrücken), weiterentwickelte Abgasturbolader- und Abgasrückführungstechniken sowie modellbasierte Verbrennungsverfahren zur Steuerung bzw. Regelung. Darüber hinaus zeichnen sich die neueren Dieselmotoren in bestimmten Betriebsbereichen trotz der prinzipiell beibehaltenden Kompressionszündung, mehr oder weniger durch homogene Verbrennungsabläufe (HCCI: *Homogeneous Charge Compression Ignition*) aus. Solche Motoren weisen in dieser Betriebsart äußert niedrige Stickoxidemissionen und Rußemissionen auf. Allerdings steigen gegebenenfalls die Kohlenmonoxid-und Kohlenwasserstoffemissionen. Obwohl für die Beseitigung dieser Schadstoffe erprobte Techniken in Form von Oxidationskatalysatoren zur Verfügung stehen, bereiten die Höhe der Emissionen in Verbindung mit den dieseltypischen niedrigen Abgastemperaturen erhebliche Schwierigkeiten.

In der EP 1 260 648 A1 werden sogenannte PTC (*pre turbocharger catalyst*), stromauf vor dem Turbolader angeordnet. Um eine zu starke Drosselung der Abgase zu vermeiden, sind diese PTC viel kleiner als ein stromab hinter dem Turbolader angeordneter weiterer Katalysator.

Auch in der DE 10 2004 045 178 A1 wird die oben genannte Anordnung zur Reinigung der Abgase beschrieben. Hierbei wird darauf hingewiesen, dass der Schwerpunkt der Abgasreinigung stromab hinter dem Turbolader zu erfolgen hat.

Die hervorgehende Lehre beider Dokumente weist jedoch den Nachteil auf, dass lediglich eine unzureichende Umsetzung der Schadstoffe, insbesondere bei Magermotoren wie Dieselmotoren, erzielt werden kann.

Insbesondere im Hinblick auf diese Situation soll eine Abgasbehandlungsanlage angegeben werden, die die vorstehend genannten technischen Schwierigkeiten und Probleme zumindest teilweise löst. Dabei soll die Abgasnachbehandlungsanlage insbesondere mit einer über die unterschiedlichen Betriebszustände des Dieselmotors bzw. Magermotors gleichmäßigen Effektivität arbeiten und trotzdem kostengünstig herstellbar sein.

Diese Aufgaben werden gelöst mit einer Abgasnachbehandlungsanlage gemäß den Merkmalen des Patentanspruchs 1 sowie einem Verfahren gemäß den Merkmalen des Patentanspruchs 6. Weitere vorteilhafte Ausgestaltungen der Erfindung sind in den abhängig formulierten Patentansprüchen angegeben. Es ist darauf hinzuweisen, dass die in den abhängig formulierten Patentansprüchen einzeln angegebenen Merkmale in beliebiger, technologisch sinnvoller, Weise kombiniert werden können, und weitere Ausgestaltungen der Erfindung aufzeigen. Die Beschreibung, insbesondere im Zusammenhang mit den Figuren, veranschaulicht weitere Ausführungsbeispiele der Erfindung.

Die Abgasnachbehandlungsanlage für eine Verbrennungskraftmaschine eines Fahrzeugs weist wenigstens eine Abgasleitung und wenigstens einen Turbolader und zumindest einen Abgas-Konverter auf, wobei der Abgas-Konverter zwischen der Verbrennungskraftmaschine und dem wenigstens einem Turbolader vorgesehen ist, der ein erstes Volumen von zumindest 0,6 Liter [1] hat.

Die Abgasanlage kann ausgehend von der Verbrennungskraftmaschine beispielsweise zunächst mehrsträngig ausgeführt werden, so dass beispielsweise für jeden Auslass des Verbrennungsraumes eine separate Abgasleitung vorgesehen ist. Diese, z. B. auch insgesamt als Fächer-Krümmer benannten, Abgasableitungsabschnitte können später zu einer gemeinsamen Abgasleitung zusammengeführt werden. Eine solche Abgasleitung (bzw. mehrere Abgasleitungen) kann mit einem Abgas-Turbolader ausgeführt sein. Ein solcher Turbolader dient der Leistungssteigerung der Verbrennungskraftmaschine durch Erhöhung des Luftmengen- und Kraftstoffdurchsatzes pro Arbeitstakt. Der Turboladerantrieb erfolgt dabei durch den Abgasdruck, wobei der Turbolader auch die Abgasgeschwindigkeit als Energiequelle nutzen kann (Stoßaufladung). Ein Turbolader besteht aus einer Abgasturbine im Abgasstrom, die über eine Welle mit einem Verdichter im Ansaugtrakt für die Verbrennungskraftmaschine verbunden ist. Die Turbine wird vom Abgasstrom der Verbrennungskraftmaschine in Rotation versetzt und treibt so den Verdichter an. Der Verdichter erhöht den Druck im Ansaugtrakt der Verbrennungskraftmaschine, so dass während des Ansaugtaktes eine größere Menge Luft in den Verbrennungsraum gelangt. Damit steht mehr Sauerstoff zur Verbrennung einer entsprechend größeren Kraftstoffmenge zur Verfügung. Damit lässt sich eine deutliche Leistungssteigerung der Verbrennungskraftmaschine (insbesondere des Dieselmotors) erreichen.

Um hierfür ausreichend Energie in dem Turbolader bereitzustellen, wurde bislang von dem Konzept Gebrauch gemacht, den Abgasstrom hoch-energetisch in den Turbolader einzuführen. Aus diesem Grund wurden auch nur sehr kleine Abgasbehandlungseinheiten in den Bereich zwischen Verbrennungskraftmaschine und Turbolader eingesetzt, um einen Druckabfall und damit eine geringere Verdichtungswirkung des Abgasturboladers zu vermeiden. So waren beispielsweise so genannte Vorturbolader-Katalysatoren "PTC" (*pre-turbocharger-catalyst*) bekannt, die entweder in die Abgasleitung direkt hinter die Auslassventile in einen Zylinderkopf der Verbrennungskraftmaschine, in den Krümmer vor dem Abgasturbolader oder direkt vor bzw. sogar in dem Abgasturbolader positioniert wurden. Durch die Positionierung eines Oxidationskatalysators an dieser motomahen Stelle, kann dieser (insbesondere mit einer eine turbulente Strömung erzeugenden Oberfläche) die Abgas-Temperatur infolge der exothermen Reaktion weiter erhöhen und damit nachfolgende Abgasreinigungskomponenten "aufwärmen".

Die Erfindung verlässt nun erstmalig diesen Weg und schlägt nunmehr vor, dass der vor dem Turbolader positionierte Abgas-Konverter ein erstes Volumen von zumindest 0,6 1 hat. Dabei dient der katalytisch aktive Abgas-Konverter nun nicht mehr zur reinen Temperaturerhöhung für die nachgelagerten Abgasbehandlungseinheiten, sondern sorgt für eine wesentliche Umsetzung der im Abgas enthaltenen Schadstoffe, insbesondere Kohlenwasserstoffe (HC), Kohlenmonoxid (CO), Stickoxide, Partikel, etc.. Solche Abgas-Konverter sind regelmäßig nach Art eines Wabenkörpers ausgebildet, wobei diese mit keramischen oder (bevorzugt) mit metallischen Wänden gebildet sind. Dazu können diese wenigstens teilweise mit entsprechenden Beschichtungen ausgeführt sein: Oxidationskatalysator, 3-Wege-Katalysator, Adsorber-Beschichtung. Darüber hinaus kann auch der Aufbau entsprechend angepasst sein, z. B. als so genannter Nebenstromfilter oder Wall-Flow-Filter. Das Volumen wird dabei durch die Summe der Wände und Kanäle gebildet. Unter Umständen kann es sogar vorteilhaft sein, insbesondere bei sehr großen Verbrennungskraftmaschinen, ein noch größeres erstes Volumen des Abgas-Konverters vor dem Turbolader vorzusehen, wie beispielsweise ein erstes Volumen von zumindest 1,0 1 oder sogar 1,5 1.

Dabei wird erstmalig das seit Jahrzehnten verfolgte Konzept verlassen, nachdem die Abgasbehandlung primär im Unterboden-Bereich des Fahrzeugs stattfindet. Hier wird vorgeschlagen, trotz der überaus beengten Platzverhältnisse im Motorraum von Fahrzeugen und trotz des mit dem Volumen zunehmenden Druckabfalls des Abgases bereits vor dem Turbolader ein so großes erstes Volumen des Abgas-Konverters vorzusehen. Grundsätzlich ist zwar möglich, dass das hier angegebene erste Volumen mit mehreren zwischen der Verbrennungskraftmaschine und dem mindestens einen Turbolader positionierten Abgas-Konvertern gebildet ist, bevorzugt ist jedoch die Bereitstellung eines einzelnen Abgas-Konverters mit dem hier angegebenen ersten Volumen.

Weiter ist bei der Abgasnachbehandlungsanlage vorgesehen dass der zumindest eine Abgas-Konverter ein erstes Volumen hat, das größer ist als ein zweites Volumen wenigstens einer Abgasnachbehandlungseinheit, die gegenüberliegend zum wenigstens einen Turbolader vorgesehen ist. Das bedeutet insbesondere, dass die Abgasnachbehandlungsanlage mit einem katalytisch aktiven Abgas-Konverter vor dem Turbolader und einer Abgasnachbehandlungseinheit, die (auch) die gleiche Funktion wie der Abgas-Konverter hat, ausgeführt ist, wobei vor dem Turbolader das größere Reaktionsvolumen vorgesehen ist. Damit wird z.B. aufgrund der größeren katalytisch aktiven Oberfläche im Abgas-Konverter und den dort herrschenden höheren Temperaturen infolge der Motomähe der signifikant größere Anteil der relevanten Schadstoffe umgesetzt. Auf diese Weise kann die Abgasnachbehandlungsanlage insgesamt kostengünstiger ausgeführt werden, insbesondere wenn der Abgas-Konverter vor dem Turbolader mit Turbulenzen erzeugenden Strukturen in bzw. an den Wänden versehen ist (Löcher, Strömungsengpässe, Strömungsumlenkungen, etc.).

Ganz besonders im Blick hat die Erfindung dabei, dass der zumindest eine Abgas-Konverter einen Oxidationskatalysator umfasst. Damit ist insbesondere gemeint, dass dieser nach Art eines Wabenkörpers ausgebildet ist, bevorzugt mit zumindest teilweise strukturierten metallischen Blechfolien, auf die eine Trägersubstanz (z. B. Washcoat) und ein entsprechender Katalysator, wie ein Edelmetall (Platin, Rhodium, etc.) vorgesehen ist. Bei der hier vorgeschlagenen Größe des Oxidationskatalysators lassen sich unter Umständen mehrere Funktionen verbinden. So ist es beispielsweise möglich, dass neben der Umsetzung von Kohlenwasserstoffen und Kohlenmonoxiden auch noch Stickstoffdioxid produziert wird, um beispielsweise einen nachgelagerten Partikelabscheider kontinuierlich regenerieren zu können.

Bevorzugt ist demnach auch eine Abgasnachbehandlungsanlage, bei der der zumindest eine Abgas-Konverter einen Oxidationskatalysator und einen Partikelabscheider umfasst. Der Partikelabscheider kann dabei als so genannter Wall-Flow-Filter mit wechselseitig verschlossenen Strömungspfaden und porösen Wänden aufgebaut sein, bevorzugt sind jedoch offene Partikelabscheider, die keine Strömungssackgassen aufweisen und insbesondere mit metallischen Komponenten umfassend zumindest Blechfolien, Drahtgewebe, Faservliese oder dergleichen aufgebaut sind. Für die Partikelabscheidung können auch zusätzlich wenigstens einer der folgenden Effekte eingesetzt werden: elektrostatische Aufladung der Partikel, Agglomeration der Partikel, Thermophorese, Diffusion, Konvektion, etc.

In einer ganz besonders bevorzugten Ausprägung der erfindungsgemäßen Abgasnachbehandlungsanlage ist der zumindest eine Abgas-Konverter in einem Sammelraum für mehrere Abgasleitungsabschnitte positioniert. Damit ist insbesondere gemeint, dass der Abgas-Konverter als ein Bauteil ausgeführt ist, und das der Abgas-Konverter im Bereich der Zusammenführung der einzelnen Krümmerrohre zu einer gemeinsamen Abgasleitung angeordnet ist. Dabei kann insbesondere auf nicht-zylindrische und/oder radial durchströmte Abgas-Konverter zurückgegriffen werden.

Die Erfindung eignet sich insbesondere für eine Abgasnachbehandlungsanlage, bei der der wenigstens ein Turbolader mit zwei Stufen ausgeführt ist. Damit ist insbesondere ein zweistufiger Turbolader vorgesehen, der eine Niederdruckstufe sowie eine Hochdruckstufe aufweist, die jeweils einen Verdichter und eine Turbine enthalten. Turbine und Verdichter sind miteinander über eine gemeinsame Welle gekoppelt. Es werden also insbesondere zwei Turbolader mit unterschiedlicher Größe verwendet. Ein kleiner Turbolader für den unteren Drehzahlbereich und ein größerer für den oberen Drehzahlbereich mit hohen Luftdurchsätzen. Die beiden Turbolader sind abgasseitig und luftseitig in Serienschaltung miteinander verbunden und werden mit Bypass-Klappen dem jeweiligen Drehzahl- und Lastbereich des Motors angepasst. Je nach Ladedruckniveau können ein bis zwei Ladeluftkühler notwendig werden.

Gemäß einem weiteren Aspekt der Erfindung wird zudem ein Verfahren zur Reinigung eines Abgases einer Verbrennungskraftmaschine mit einer erfindungsgemäß erläuterten Abgasnachbehandlungsanlage, bei der wenigstens ein Turbolader vorgesehen ist, vorgeschlagen, wobei das gesamte Abgas in einem stärkeren Umfang zwischen Verbrennungskraftmaschine und Turbolader oxidativ umgesetzt wird als in einem dem Turbolader nachfolgenden Bereich.

Eine Umsetzung im "stärkeren Umfang" bedeutet dabei beispielsweise, dass im Rahmen eines reproduzierbaren Standard-Test der (Massen-)Anteil der Kohlenwasserstoffe (HC) und/oder Kohlenmonoxide (CO), der vor dem Turbolader umgesetzt wird, größer ist als der mit den nachfolgenden Abgasnachbehandlungseinheiten umgesetzte (Massen-)Anteil. Dies kann aufgrund der erhöhten Temperatur in Motomähe auch mit einem gegenüber den Abgasnachbehandlungseinheiten kleineren ersten Volumen des Abgas-Konverters erreicht werden, bevorzugt ist jedoch, dass der stärkere Umfang mit einem größeren ersten Volumen einhergeht. Im Übrigen wird zu diesem Verfahren auf die vorstehend genannten Effekte der Vorrichtung verwiesen.

Besonders bevorzugt lässt sich so ein Fahrzeug aufweisend eine Abgasnachbehandlungsanlage, wie sie hier erfindungsgemäß beschrieben ist, mit einem hier ebenfalls erfindungsgemäß beschriebenen Verfahren betreiben, wobei sich die Anwendung bei Verbrennungskraftmaschinen nach Art eines Magermotors anbietet. Ein "Magermotor" ist dabei eine Verbrennungskraftmaschine, die regelmäßig mit Luftüberschuss betrieben wird, wie beispielsweise ein Dieselmotor.

Die Erfindung sowie das technische Umfeld werden anhand der Figuren näher erläutert. Es ist darauf hinzuweisen, dass die in den Figuren veranschaulichten Ausführungsbeispiele die Erfindung nicht beschränken sollen. Es zeigen schematisch:
- Fig. 1:: eine erste Ausführungsvariante einer erfindungsgemäßen Abgasnachbehandlungsanlage eines Fahrzeugs, und
- Fig. 2:: eine weitere Ausführungsvariante einer erfindungsgemäßen Abgasnachbehandlungsanlage.

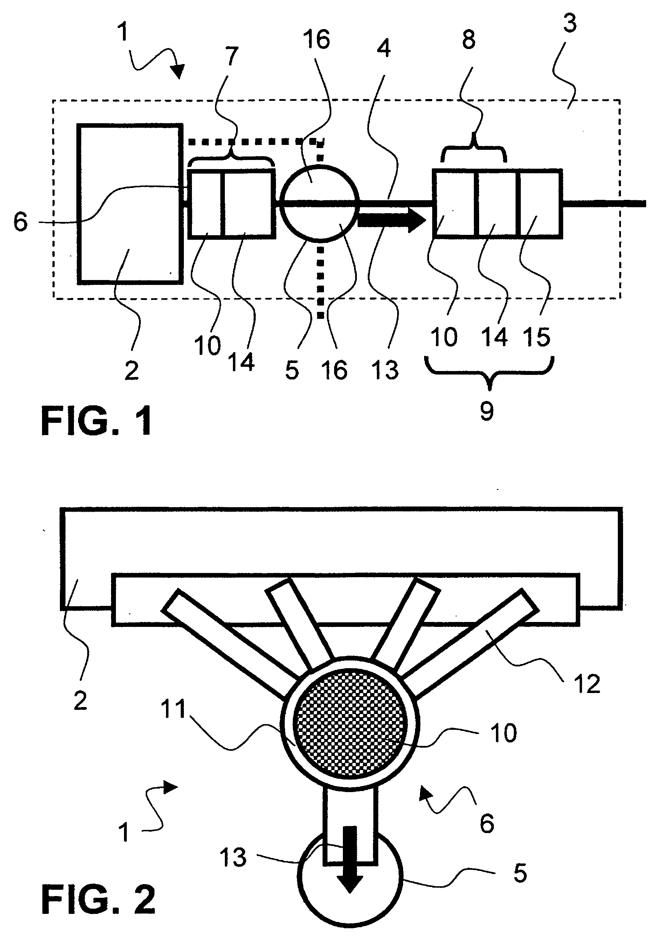

In der Fig. 1 ist schematisch ein Fahrzeug 3 angedeutet, das eine Verbrennungskraftmaschine 2 nach Art eines Dieselmotors aufweist, wobei das in der Verbrennungskraftmaschine generierte Abgas durch eine Abgasnachbehandlungsanlage 1 hindurchgeführt wird. In dem hier veranschaulichten Beispiel durchströmt das Abgas in Strömungsrichtung 13 zunächst einen Abgas-Konverter 6, dann einen (mit 2 Stufen 16 ausgebildeten) Turbolader 5, bevor das Abgas die Abgasleitung 4 weiter, beispielsweise bis in einen Unterboden des Fahrzeugs 3 strömt, wo weitere Abgasnachbehandlungseinheiten 9, hier beispielsweise ein Oxidationskatalysator 10, ein Partikelabscheider 14 und ein SCR-Katalysator 15, vorgesehen sind.

Dabei hat der Abgas-Konverter 6, der zwischen der Verbrennungskraftmaschine 2 und dem Turbolader 5 vorgesehen ist, ein erstes Volumen 7, das größer ist als ein zweites Volumen 8 der Abgasnachbehandlungseinheiten 9, die die gleichen Funktionen erfüllen. Hier ist der Abgas-Konverter 6 mit einer Kombination aus Oxidationskatalysator 10 und einem oxidativ beschichteten Partikelabscheider 14 gebildet. Bei der hier veranschaulichten Ausführungsvariante ist der Abgas-Konverter 6 beispielsweise mit einer Oxidationsbeschichtung versehen, ebenso wie der Oxidationskatalysator 10 und der Partikelabscheider 14. Der SCR-Katalysator (SCR = *selective catalytic reaction*) hat eine Reduktionsbeschichtung und damit eine andere Funktion. Folglich ist hier das erste Volumen 7 größer als das mit dem Oxidationskatalysator 10 und der Partikelabscheider 14 gebildete zweite Volumen 8 (wobei der Zwischenraum nicht betrachtet wird), dies ist aber nicht zwingend erforderlich.

In Fig. 2 ist beispielsweise eine Draufsicht auf einen Teil einer Verbrennungskraftmaschine 2 mit den nachfolgenden Abgasleitungsabschnitten 12, auch Krümmer genannt, dargestellt. Die einzelnen Abgasleitungsabschnitte 12 münden in einen gemeinsamen Sammelraum 11, in dem hier wieder ein Oxidationskatalysator 10 als erster katalytischer Konverter 6 vorgesehen ist. Das durch die Abgasleitungsabschnitte 12 in den Abgas-Konverter 6 einströmende Abgas wird entsprechend katalytisch behandelt und verlässt danach (zusammen) in Strömungsrichtung 13 den Abgas-Konverter 6 und strömt weiter hin zum stromabwärts angeordneten Turbolader 5.

Selbstverständlich können naheliegende Abwandlungen vorgenommen werden. So ist es beispielsweise möglich, dass die Abgasnachbehandlungsanlage 1 bis hinter eine Mehrzahl von Abgas-Turboladern 5 getrennte Abgasleitungen 4 aufweist. Auch können mehrere Abgas-Konverter 6 zwischen der Verbrennungskraftmaschine 2 und dem wenigstens einen Turbolader 5 vorgesehen sein. Darüber hinaus kann der Abgas-Konverter 6 neben einem Oxidationskatalysator 10 auch eine andere Abgasnachbehandlungseinheit 9 umfassen, wie beispielsweise einem Partikelabscheider. Zudem können, gerade im Zusammenhang mit einem SCR-Katalysator auch Vorrichtungen zum Einleiten von flüssigen und/oder dampfförmigen Reduktionsmitteln vorgesehen sein. Darüber hinaus kann der Abgas-Konverter 6 mit Öffnungen in den Kanalwänden und/oder Leitschaufeln und/oder Strömungsengpässen und/oder Verwirbelungsstellen ausgeführt sein, um eine turbulente Strömung im Inneren zu realisieren und so den Kontakt zwischen den umzusetzenden Schadstoffen und der katalytisch aktiven Beschichtung des Abgas-Konverters zu verbessern. Dies wird insbesondere in Kenntnis des damit einhergehenden Druckverlustes vorgeschlagen, der einen entsprechenden Einfluss auf den nachgeschalteten Turbolader 5 hat. Gegebenenfalls können dann auch mehrere Turbolader 5 hintereinander in Strömungsrichtung des Abgases vorgesehen sein, um diesen Effekt etwas auszugleichen.

### Bezugszeichenliste

- 1: Abgasnachbehandlungsanlage
- 2: Verbrennungskraftmaschine
- 3: Fahrzeug
- 4: Abgasleitung
- 5: Turbolader
- 6: Abgas-Konverter
- 7: erstes Volumen
- 8: zweites Volumen
- 9: Abgasnachbehandlungseinheit
- 10: Oxidationskatalysator
- 11: Sammelraum
- 12: Abgasleitungsabschnitt
- 13: Strömungsrichtung
- 14: Partikelabscheider
- 15: SCR-Katalysator
- 16: Stufe

## Patentansprüche

1. Abgasnachbehandlungsanlage (1) für eine Verbrennungskraftmaschine (2) eines Fahrzeugs (3), aufweisend wenigstens eine Abgasleitung (4) und wenigstens einen Turbolader (5) und zumindest einen katalytisch aktiven Abgas-Konverter (6), wobei der Abgas-Konverter (6) zwischen der Verbrennungskraftmaschine (3) und dem wenigstens einen Turbolader (5) vorgesehen ist, der-und ein erstes Volumen (7) von zumindest 0,6 Liter hat, das größer ist als ein zweites Volumen (8) wenigstens einer Abgasnachbehandlungseinheit (9), die stromab des wenigstens einen Turboladers (5) vorgesehen ist und wobei das erste Volumen (7) und das zweite Volumen (8) die gleichen Funktionen erfüllen.

2. Abgasnachbehandlungsanlage (1) nach Patentanspruch 1, bei der der zumindest eine Abgas-Konverter (6) einen Oxidationskatalysator (10) umfasst.

3. Abgasnachbehandlungsanlage (1) nach Patentanspruch 2, bei der der zumindest ein Abgas-Konverter (6) einen Oxidationskatalysator (10) und einen Partikelabscheider (14) umfasst.

4. Abgasnachbehandlungsanlage (1) nach einem der vorhergehenden Patentansprüche, bei der der zumindest ein Abgas-Konverter (6) in einem Sammelraum (11) für mehrere Abgasleitungsabschnitte (12) positioniert ist.

5. Abgasnachbehandlungsanlage (1) nach einem der vorhergehenden Patentansprüche, bei der der wenigstens ein Turbolader (5) mit zwei Stufen (16) ausgeführt ist.

6. Verfahren zur Reinigung eines Abgases einer Verbrennungskraftmaschine (2) mit einer Abgasnachbehandlungsanlage (1) gemäß einem der Patentansprüche 1 bis 5, wobei das gesamte Abgas in einem stärkeren Umfang zwischen Verbrennungskraftmaschine (2) und Turbolader (5) oxidativ umgesetzt wird als in einem dem Turbolader (5) nachfolgenden Bereich.

7. Fahrzeug (3) aufweisend eine Abgasnachbehandlungsanlage (1) gemäß einem der Patentansprüche 1 bis 5, wobei die Verbrennungskraftmaschine (2) ein Magermotor ist.

## Claims

1. Exhaust-gas aftertreatment system (1) for an internal combustion engine (2) of a vehicle (3) having at least one exhaust line (4) and at least one turbocharger (5) and at least one catalytically active exhaust-gas converter (6), with the exhaust-gas converter (6) being provided between the internal combustion engine (3) and the at least one turbocharger (5) and having a first volume (7) of at least 0.6 liters, which is greater than a second volume (8) of at least one exhaust-gas aftertreatment unit (9), which is provided downstream of the at least one turbocharger (5), and wherein the first volume (7) and the second volume (8) fulfill the same functions.

2. Exhaust-gas aftertreatment system (1) according to claim 1, wherein the at least one exhaust-gas converter (6) comprises an oxidation catalytic converter (10).

3. Exhaust-gas aftertreatment system (1) according to claim 2, wherein the at least one exhaust-gas converter (6) comprises an oxidation catalytic converter (10) and a particle separator (14).

4. Exhaust-gas aftertreatment system (1) according to one of the preceding claims, wherein the at least one exhaust-gas converter (6) is positioned in a collecting space (11) for a plurality of exhaust line sections (12).

5. Exhaust-gas aftertreatment system (1) according to one of the preceding claims, wherein the at least one turbocharger (5) is constructed having two stages.

6. Method for purifying an exhaust-gas of an internal combustion engine (2) with an exhaust-gas aftertreatment system (1) according to one of claims 1 to 5, wherein the entire exhaust-gas is converted by oxidation to a greater degree between the internal combustion engine (2) and the turbocharger (5) than in a region downstream of the turbocharger (5).

7. Vehicle (3) having an exhaust-gas aftertreatment system (1) according to one of Claims 1 to 5, wherein the internal combustion engine (2) is a lean-burn engine.

## Revendications

1. Installation de post-traitement de gaz d'échappement (1) pour une machine à combustion interne (2) d'un véhicule (3), comportant au moins une conduite de gaz d'échappement (4) et au moins un turbocompresseur (5) et au moins un convertisseur de gaz d'échappement à activité catalytique (6), le convertisseur de gaz d'échappement (6) étant prévu entre la machine à combustion interne (3) et l'au moins un turbocompresseur (5), et un premier volume (7) d'au moins 0,6 litres, qui est plus grand qu'un deuxième volume (8), d'au moins une unité de post-traitement de gaz d'échappement (9), qui est prévue en aval de l'au moins un turbocompresseur (5), et dans quel cas le premier volume (7) et le deuxième volume (8) ont les mêmes fonctions.

2. Installation de post-traitement de gaz d'échappement (1) selon la revendication 1, dans le cas de laquelle l'au moins un convertisseur de gaz d'échappement (6) comprend un catalyseur d'oxydation (10).

3. Installation de post-traitement de gaz d'échappement (1) selon la revendication 2, dans laquelle l'au moins un convertisseur de gaz d'échappement (6) comprend un catalyseur d'oxydation (10) et un séparateur de particules (14).

4. Installation de post-traitement de gaz d'échappement (1) selon l'une des revendications précédentes, dans le cas de laquelle l'au moins un convertisseur de gaz d'échappement (6) est positionné dans un espace collecteur (11) pour une pluralité de tronçons de conduite de gaz d'échappement (12).

5. Installation de post-traitement de gaz d'échappement (1) selon l'une des revendications précédentes, dans le cas de laquelle l'au moins un turbocompresseur (5) est réalisé avec deux étapes (16).

6. Procédé destiné à l'épuration d'un gaz d'échappement d'une machine à combustion interne (2) avec une installation de post-traitement de gaz d'échappement (1) conforme à l'une des revendications 1 à 5, dans quel cas tout le gaz d'échappement est transformé de façon oxydative en un volume de plus grande importance entre la machine à combustion interne (2) et le turbocompresseur (5) que dans une région qui suit en aval le turbocompresseur (5).

7. Véhicule (3) comportant une installation de post-traitement de gaz d'échappement (1) conforme à l'une des revendications 1 à 5, la machine à combustion interne (2) étant un moteur à mélange pauvre.
